# EUROPEAN PATENT SPECIFICATION

(11) **EP 2 257 342 B1**
(45) Date of publication and mention of the grant of the patent: **07.12.2016**
(21) Application number: 09720672.6
(22) Date of filing: 12.03.2009
(51) Int. Cl.: A62B 1/20, B63B 7/08, F16K 15/14

(54) **AN INFLATABLE UNIT**
EINE AUFBLASBARE EINHEIT
UNE UNITÉ GONFLABLE

(30) Priority: 14.03.2008 DK 200800405
(43) Date of publication of application: 08.12.2010
(73) Proprietor: VIKING LIFE-SAVING EQUIPMENT A/S, 6710 Esbjerg V (DK)
(72) Inventor: RASMUSSEN, Gert Smedmann, DK-6715 Esbjerg N (DK)
(74) Representative: Hoffmann Dragsted A/S
(86) International application number: PCT/DK2009/050055
(87) International publication number: WO 2009/112035

(56) References cited:
- EP-A2- 0 324 519
- FR-A1- 2 641 597
- GB-A- 2 044 871
- GB-A- 2 228 903
- US-A- 2 568 976

## Description

### Technical field of the invention

The present invention relates to an inflatable unit for evacuation purposes, said inflatable unit comprising at least a first inflatable chamber and a second inflatable chamber, said chambers abutting each other, an opening, which is arranged between the two inflatable chambers, a pressure source with an inflating gas, which pressure source is connected to the first inflatable chamber, a one-way valve, which is arranged in connection with the opening between the inflatable chambers, so that the inflating gas can only pass from the first chamber to the second chamber.

The term "inflatable unit" is in this context to be construed as an inflatable liferaft, an inflatable slide, an inflatable ramp, an inflatable chute, and similar units used for evacuation purposes.

### Background art

It is known to use one-way valves in the opening between two inflatable chambers so that the inflating gas can only pass from one chamber to the other and not back, see for instance GB 2,044,871. The known one-way valves comprise a valve body; said valve body is made of a rigid material, such as plastic materials. The one-way valve also comprises a valve seat arranged inside the valve body, a valve closure member seating on the valve seat and means for urging the valve closure member onto the valve seat. The valve body furthermore comprises an external first flange which abuts the inside of one of the chambers as well as the second flange. The second flange is internally screw threaded and screws onto an externally screw threaded portion of the valve body so that it abuts the inside of the second chamber.

Several disadvantages have been observed with the known one-way valves, namely:
- the valve closure member has a little area, wherefore it is often experienced that dirt and other obstacles may be present between the valve closure member and the valve seat, whereby the one-way valve is leaking, since the valve closure member cannot sealingly be urged against the valve seat. The consequence is that the one-way valve is not a one-way valve since air and gasses may float in a non-intended direction.
- The flow area of the known one-way valves, i.e. the open position of the valve closure member, is rather small, so that several one-way valves are often necessary to implement between the two chambers when a larger flow capacity is intended.
- The mounting procedures of the known one-way valves are time-consuming since often more than one one-way valve is necessary, and it has also been observed that it is difficult to seal external sides of the valve bodies, which requires additional supply of sealing material between and around the flanges.
- Furthermore, since the valve body is made of rigid materials and the inflatable chambers are made of a flexible material, it is often experienced that the valve body may brake, especially in circumstances where the inflatable chambers are deflated, whereby sharp pieces of the broken valve body can puncture and rupture the inflatable chambers, and thereby destroy the inflatable unit.

### Summary of the invention

An object of the present invention is to wholly or partly overcome the above disadvantages and drawbacks of the prior art. More specifically, it is an object to provide an inflatable unit, wherein the one-way valve between two chambers is easy to implement.

It is also an object of the present invention to provide an inflatable unit, wherein the one-way valve has a high flow capacity.

Furthermore, it is an object of the present invention to provide an inflatable unit, wherein the valve closure member of the one-way valve has a large area.

Additionally, it is an object of the present invention to provide an inflatable unit, which, in a deflated state, may be packed without risking that the one-way valve between the two chambers brakes and thereby punctures the inflatable chambers.

The above objects, together with numerous other objects, advantages and features, which will become evident from the below description, are accomplished by a solution in accordance with the present invention by the one-way valve comprising at least a first sheet, which is made of a flexible material; said first sheet is adapted to be a sleeve or be part of a sleeve, said sleeve having a first end and a second end, and at least openings at both ends, said sleeve being substantially closed between the ends, said sleeve being directly or indirectly connected at the first end to an outer side of the first chamber around the opening so that an airtight passage for the inflating gas is created inside the sleeve.

Hereby, it is obtained that the flexible one-way valve has a large area of the valve closure member so that the valve is more reliable in view of leakage than the known valves. Furthermore, the flexible material of the one-way valve enables that the one-way valve does not break and thereby puncture the inflatable unit. Also, the flexible one-way valve according to the invention has a higher flow capacity than the valves known in the prior art, whereby a smaller number of valves need to be mounted. Additionally, the flexible one-way valve according to the invention is less time-consuming to mount than the prior art valves. Consequently, the inflatable unit according to the invention with the incorporation of a flexible one-way valve provides a high security that the inflatable unit will function properly, which especially is vital during evacuation situations.

The matter is that the first sheet of flexible material functions as the valve closure member. Furthermore, the first sheet of flexible material is adapted to in a relaxed state to function as a normally-closed valve. When the pressure is greater in the first chamber than in the second chamber by a certain amount, the pressure differential, the first sheet will flex and the one-way valve will thereby open and allow flow from the first chamber to the second chamber. Once the positive pressure stops, i.e. the pressure in the first chamber is substantially equal to or smaller than the pressure in the second chamber, the first sheet will due to the flexible material automatically flex back to its starting position, and the one-way valve will thus be closed. A greater pressure in the second chamber than in the first chamber will, furthermore, apply a force/pressure to the exterior of the first sheet, i.e. outside the sleeve, which again will help in closing the sleeve of the one-way valve.

The term "sleeve" is in this context to be construed as a longitudinal piece which is substantially closed in the longitudinal direction and which at least comprises two openings.

According to the invention, the sleeve may be constituted by the first sheet and the outer side of the first chamber.

Also, according to the invention, the first sheet may be arranged so that it constitutes the sleeve.

In a preferred embodiment according to the invention, the one-way valve may comprise a second sheet, so that the sleeve is constituted by the first sheet and the second sheet.

Furthermore, the one-way valve may comprise a plurality of sheets, said sheets constituting the sleeve.

Additionally, at least one of the sheets may be made of a material having inherent adhesion properties so that the sheet has an intrinsic urge to being close to another sheet, whereby the sheets are attracted to each other without being adhered to each other. Hereby, it is obtained that the sheets close the one-way valve even in the situation where there is no pressure.

According to the invention, the sheet may be connected to the first chamber or the sheets may be connected to each other by welding, gluing, cementing or a combination thereof.

Furthermore, at least one of the sheets may be made of a flexible material such as silicone.

Additionally, the sheets may be made of a material having a working temperature from around -60°C to 100°C. Advantageously, the material does not substantially change its properties within said temperature interval.

Also, the sleeve may have a length from around 0.05 m to 0.4 m. The actual length is an interaction between the flexibility of the material, the inherent adhesion properties of the material as well as the fact that a passage inside and along the sleeve may be provided. However, the longer the length of the sleeve is, the larger is the area of the valve closure member of the one-way valve, whereby a tighter one-way valve is obtained.

Moreover, the sleeve may have a width from around 0.02 m to 0.2 m. The width of the sleeve is preferably so wide that flexing of the used material is facilitated.

According to the invention, a width of the sleeve may be varying along a length of the sleeve.

Furthermore, the opening(s) may have an area of around 0.5 cm² to 10.0 cm². Hereby, it is obtained that the flow capacity of a one-way valve may be adapted to the specific requirements.

Advantageously, a flange may be arranged between the opening at the first end of the sleeve and the opening between the two inflatable chambers.

According to the invention, the flange may be made of a material, which is weldable and/or glueable to the outer side of the first chamber.

Also, the flange may be a composite, which has different properties on each side of the flange.

### Brief description of the drawings

The invention and its many advantages will be described in more detail below with reference to the accompanying schematic drawings, which for the purpose of illustration show some non-limiting embodiments and in which
Fig. 1 shows a first inflatable chamber and a second inflatable chamber, the second chamber being shown in a cross-sectional view so that the one-way valve between the two chambers is visible,
Fig. 2 shows a one-way valve in a top view,
Fig. 3 shows a one-way valve in a bottom view, with a flange arranged around an opening at one end,
Figs. 4-7 show different configurations of additional embodiments of a one-way valve,
Fig. 8 shows a one-way valve with a flange arranged between the first chamber and the sleeve, and
Fig. 9 shows a flange in a cross-sectional view.

All the figures are highly schematic and not necessarily to scale, and they show only parts which are necessary in order to elucidate the invention, other parts being omitted or merely suggested.

### Description of preferred embodiments

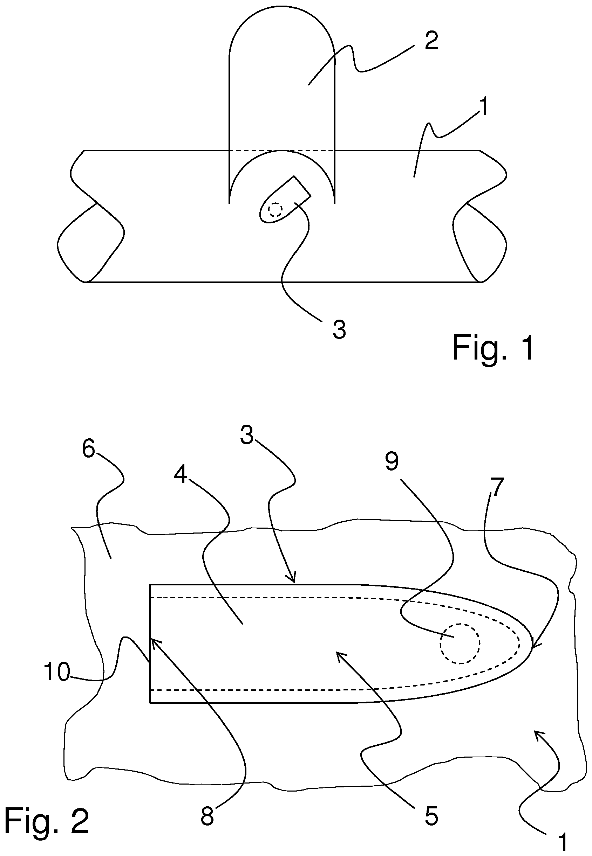

Fig. 1 shows a part of an inflatable unit for evacuation purposes. The part of the inflatable unit comprises a first inflatable chamber 1 and a second inflatable chamber 2, said chambers 1, 2 abutting each other. In this embodiment, the two chambers are connected in a T-joint. Furthermore, an opening (not shown) is arranged between the two inflatable chambers 1, 2. A pressure source (not shown) with an inflating gas is connected to the first inflatable chamber 1, and a one-way valve 3 is arranged in connection with the opening between the inflatable chambers 1, 2, so that the inflating gas only can pass from the first chamber 1 to the second chamber 2. The second chamber 2 is shown in a cross-sectional view, so that the one-way valve 3 between the two chambers 1, 2 is visible.

According to the present invention, as shown in Fig. 2, the one-way valve 3 comprises at least a first sheet 4, which is made of a flexible material. The first sheet 4 is adapted to be a sleeve or be part of a sleeve 5. In the embodiment shown in Fig. 2, the first sheet 4 is part of the sleeve 5, and the sleeve 5 is furthermore constituted by the outer side 6 of the first chamber 1. The sleeve 5 has a first end 7 and a second end 8, and at least openings 9, 10 at both ends 7, 8. Furthermore, the sleeve 5 is closed substantially in a longitudinal direction between the ends 7, 8 and the sleeve 5 is directly connected at the first end 7 to the outer side 6 of the first chamber 1 around the opening 9 so that an airtight passage for the inflating gas is created inside the sleeve 5. The term "directly connected" is in this context to be construed as the sleeve being attached to the outer side of the first chamber without any intermediate layers other than adhesives or similar connection means.

The first sheet 4 is in the embodiment shown in Fig. 2 attached to the outer side 6 of the first chamber 1 along substantially its entire circumferential, as shown by the dotted line, except at the second end 8, where the first sheet 4 and the outer side 6 of the first chamber 1 is not connected or attached, thereby providing an opening 10 in the sleeve 5. The sleeve 5 is closed in the other end 7, however, the sleeve 5 is attached to the outer side 6 of the first chamber 1 so that the first end 7 of the sleeve is arranged above the opening 9. The opening 9 is the opening between the two chambers 1, 2. Thus, the two openings 9 and 10 constitute in this embodiment of the one-way valve the two openings.

In another embodiment (not shown), the sleeve may be created by folding the first sheet and attaching the sides of the first sheet to each other, either by welding or gluing, so that sleeve configuration is created. The sleeve may be closed in the one end and open in the other as well as having an opening in the first sheet, which is adapted to be connected to the opening between the two chambers. Furthermore, the sleeve may be directly or indirectly connected to the outer side of the first chamber.

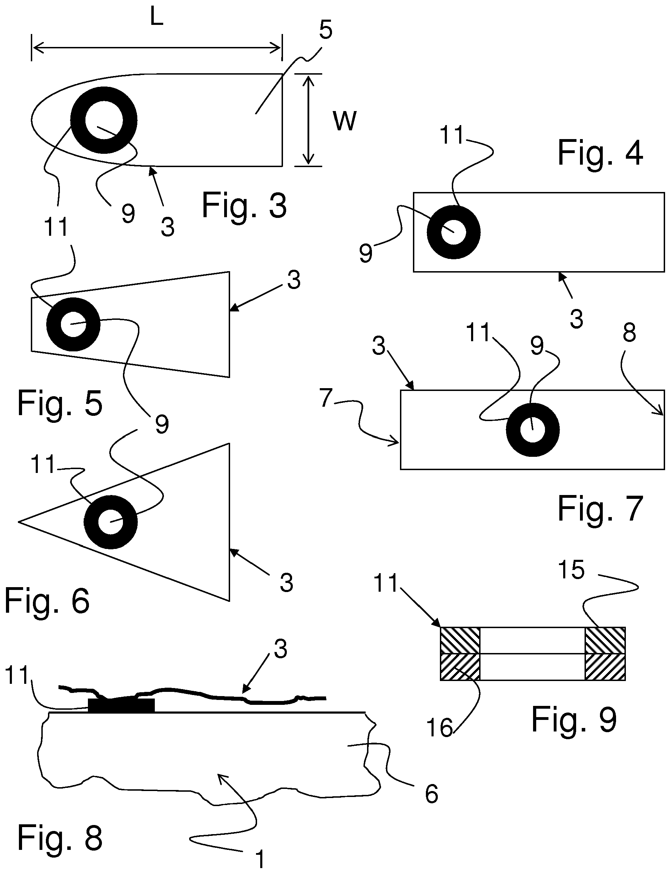

Fig. 3 shows another embodiment of a one-way valve 3 in a bottom view. In this embodiment, the one-way valve comprises a second sheet (not shown), so that the sleeve 5 is constituted by the first and second sheets. The sheets may be welded or be glued together. Within the inventive idea, the sleeve may as well be constituted by a plurality of sheets, which are attached to each other for creating the sleeve configuration. In the shown embodiment, one of the sheets have an opening 9, which may be aligned with the opening (not shown) between the two chambers and may be attached around the opening in a sealingly manner.

Furthermore, a flange 11 is arranged around the opening 9 and is attached to the outer side of the sleeve 5. The flange 11 is adapted to be connected to the outer side of the first chamber around the opening between the two chambers. Hereby, it is obtained, that the one-way valve may be made of another material than the inflatable chambers and still be sealingly connected to the outer side of the first chamber, which will be further described in connection with Fig. 9 below. Furthermore, by applying the flange 11 to the sleeve 5 and only connecting the flange 11 to the outer side of the first chamber, it is obtained that the sleeve 5 and thereby the one-way valve is easy to mount. Additionally, the flange 11 provides a distance between the one-way valve and the outer side of the first chamber, which has shown to provide a reliable one-way valve. Also, the flange 11 may be connected to the sleeve with only a small extension around the opening, so that the entire extension of the flange 11 is not connected to the sleeve. The other side of the flange 11, which is connected to the outer side of the first chamber, may be connected with substantially the entire extension of the flange 11. Hereby, a flexible as well as reliable attachment of the one-way valve to the outer side of the first chamber is obtained.

The sleeve may have a length L from around 0.05 m to 0.4 m, and it may have a width W from around 0.02 m to 0.2 m. Furthermore, the width W of the sleeve may be varying along the length of the sleeve, which is shown in Figs. 5 and 6. Furthermore, the opening 9 as well as the opening between the two chambers may have an area of around 0.5 cm² to 10.0 cm². The size of the area may be chosen in view of the flow capacity intended through the one-way valve. The opening 9 may as well be constituted by a plurality of holes, for instance in the form of a sieve.

Figs. 4-6 show different embodiments and configurations of the one-way valve 3. All shown embodiments being provided with flanges 11 around the openings 9. Said flanges 11 are arranged at one of the ends of the sleeve.

In Fig. 7, yet another embodiment of the one-way valve 3 is shown. In this embodiment, the sleeve comprises an opening 9 between the two ends 7, 8. Around the opening 9 a flange 11 is arranged, said opening and flange being adapted to be connected to the outer side of the first chamber around the opening between the two chambers. Each end 7, 8 of the sleeve may be open so that a passage for the inflating gas into the second chamber is created in each end of the sleeve. In another not shown embodiment, the flange may be arranged in the end of the sleeve.

In Fig. 8, a one-way valve is shown in a side view. Between the sleeve of the one-way valve and the outer side 6 of the first chamber 1, a flange 11 is arranged. From Fig. 8, it is easily deduced that the flange 11 is connected to the outer side 6 of the first chamber 1 in its full extension and only in a small extension to the sleeve.

Furthermore, the flange 11 may be made of a composite material, which has different properties on each side of the flange 11. In Fig. 9, a cross-sectional view of a composite flange 11 is shown. In this embodiment, the flange is made of two different materials. A first material 15, which has properties so that it may for instance be welded to the sleeve; and a second material 16, which has properties so that it may be glued to the outer surface of the first chamber. This is especially expedient when the first chamber of the inflatable unit is made of for instance natural rubber (NR), which is impossible to weld in, and the sleeve is made of weldable material.

Advantageously, at least one of the sheets is made of a material having inherent adhesion properties, so that when the one-way valve, i.e. the sheets of the sleeve, is closed, the sheets have this intrinsic urge to be attracted to each other, whereby these so-called attraction forces between the sheets help in closing and maintaining the closure of the one-way valve. The sheets may be made of a flexible material such as silicone, or similar materials having the same properties as silicone. The sheets may also be made of a polymeric material, such as natural rubber (NR), polyurethane (PU), thermoplastic poly urethane (TPU), butyl rubber (BR), polyvinylchloride (PVC), polychloroprene (CR), polyethylene (PE), or a combination thereof, or a composite, which comprises one or more of said polymeric materials. Also, the sheets may be made of a material having a working temperature from around -60°C to 100°C.

Although the invention above has been described in connection with preferred embodiments of the invention, it will be evident for a person skilled in the art that several modifications are conceivable without departing from the invention as defined by the following claims.

## Claims

1. An inflatable unit for evacuation purposes, said inflatable unit comprising at least a first inflatable chamber (1) and a second inflatable chamber (2), said chambers (1, 2) abutting each other, an opening, which is arranged between the two inflatable chambers (1, 2), a pressure source with an inflating gas, which pressure source is connected to the first inflatable chamber (1), a one-way valve (3), which is arranged in connection with the opening between the inflatable chambers (1, 2), so that the inflating gas only can pass from the first chamber (1) to the second chamber (2), **characterised in that** the one-way valve (3) comprises at least a first sheet (4), which is made of a flexible material, said first sheet (4) being adapted to be a sleeve (5) or be part of a sleeve (5), said sleeve (5) having a first end (7) and a second end (8), and at least openings (9, 10) at both ends (7, 8), said sleeve (5) being substantially closed between the ends (7, 8), said sleeve (5) being directly or indirectly connected at the first end (7) to an outer side (6) of the first chamber (1) around the opening so that an airtight passage for the inflating gas is created inside the sleeve (5).

2. An inflatable unit according to claim 1, wherein the sleeve (5) is constituted by the first sheet (4) and the outer side (6) of the first chamber (1).

3. An inflatable unit according to claim 1, wherein the first sheet (4) is arranged so that it constitutes the sleeve (5).

4. An inflatable unit according to claim 1, wherein the one-way valve (3) comprises a second sheet, so that the sleeve (5) is constituted by the first sheet and the second sheet.

5. An inflatable unit according to claim 1, wherein the one-way valve (3) comprises a plurality of sheets, said sheets constituting the sleeve.

6. An inflatable unit according to any one of the preceding claims, wherein the sheet (4) is connected to the first chamber (1) or the sheets are connected to each other by welding, gluing, cementing or a combination thereof.

7. An inflatable unit according to any one of the preceding claims, wherein at least one of the sheets is made of a flexible material such as silicone.

8. An inflatable unit according to any one of the preceding claims, wherein a width (W) of the sleeve (5) is varying along a length (L) of the sleeve.

9. An inflatable unit according to any one of the preceding claims, wherein a flange (11) is arranged between the opening at the first end of the sleeve (5) and the opening between the two inflatable chambers (1, 2).

10. An inflatable unit according to claim 9, wherein the flange (11) is made of a material, which is weldable and/or glueable to the outer side (6) of the first chamber (1).

11. An inflatable unit according to claim 9 and/or 10, wherein the flange (11) is a composite, which has different properties on each side of the flange (11).

## Patentansprüche

1. Aufblasbare Einheit für Evakuierungszwecke, wobei die aufblasbare Einheit wenigstens Folgendes umfasst: eine erste aufblasbare Kammer (1) und eine zweite aufblasbare Kammer (2), wobei die Kammern (1, 2) aneinanderstoßen, eine Öffnung, die zwischen den zwei aufblasbaren Kammern (1, 2) angeordnet ist, eine Druckquelle mit einem Gas zum Aufblasen, wobei die Druckquelle mit der ersten aufblasbaren Kammer (1) verbunden ist, ein Rückschlagventil (3), das in Verbindung mit der Öffnung zwischen den aufblasbaren Kammern (1, 2) angeordnet ist, derart, dass das Gas zum Aufblasen nur von der ersten Kammer (1) zur zweiten Kammer (2) gelangen kann, **dadurch gekennzeichnet, dass** das Rückschlagventil (3) wenigstens eine erste Folie (4) umfasst, die aus einem biegsamen Material hergestellt ist, wobei die erste Folie (4) dafür eingerichtet ist, eine Hülse (5) oder ein Teil einer Hülse (5) zu sein, wobei die Hülse (5) ein erstes Ende (7) und ein zweites Ende (8) und wenigstens Öffnungen (9, 10) an beiden Enden (7, 8) hat, wobei die Hülse (5) zwischen den Enden (7, 8) im Wesentlichen geschlossen ist und die Hülse (5) am ersten Ende (7) um die Öffnung herum direkt oder indirekt mit einer Außenseite (6) der ersten Kammer (1) verbunden ist, derart, dass innerhalb der Hülse (5) ein luftdichter Durchgang für das Gas zum Aufblasen erzeugt wird.

2. Aufblasbare Einheit nach Anspruch 1, wobei die Hülse (5) durch die erste Folie (4) und die Außenseite (6) der ersten Kammer (1) gebildet wird.

3. Aufblasbare Einheit nach Anspruch 1, wobei die erste Folie (4) derart eingerichtet ist, dass sie die Hülse (5) bildet.

4. Aufblasbare Einheit nach Anspruch 1, wobei das Rückschlagventil (3) eine zweite Folie umfasst, derart, dass die Hülse (5) durch die erste Folie und die zweite Folie gebildet wird.

5. Aufblasbare Einheit nach Anspruch 1, wobei das Rückschlagventil (3) mehrere Folien umfasst und diese Folien die Hülse bilden.

6. Aufblasbare Einheit nach einem der vorhergehenden Ansprüche, wobei die Folie (4) mit der ersten Kammer (1) oder die Folien untereinander durch Schweißen, Kleben, Verkitten oder eine Kombination daraus verbunden sind.

7. Aufblasbare Einheit nach einem der vorhergehenden Ansprüche, wobei wenigstens eine der Folien aus einem biegsamen Material wie etwas Silikon hergestellt ist.

8. Aufblasbare Einheit nach einem der vorhergehenden Ansprüche, wobei eine Breite (W) der Hülse (5) entlang einer Länge (L) der Hülse veränderlich ist.

9. Aufblasbare Einheit nach einem der vorhergehenden Ansprüche, wobei zwischen der Öffnung am ersten Ende der Hülse (5) und der Öffnung zwischen den zwei aufblasbaren Kammern (1, 2) ein Flansch (11) angeordnet ist.

10. Aufblasbare Einheit nach Anspruch 9, wobei der Flansch (11) aus einem Material hergestellt ist, das mit der Außenseite (6) der ersten Kammer (1) verschweißt und/oder verklebt werden kann.

11. Aufblasbare Einheit nach Anspruch 9 und/oder 10, wobei der Flansch (11) ein Verbundmaterial ist, das auf jeder Seite des Flansches (11) unterschiedliche Eigenschaften hat.

## Revendications

1. Unité gonflable à des fins d'évacuation, ladite unité gonflable comprenant au moins une première chambre gonflable (1) et une seconde chambre gonflable (2), lesdites chambres (1, 2) venant en butée entre elles, une ouverture qui est agencée entre les deux chambres gonflables (1, 2), une source de pression avec un gaz de gonflage, laquelle source de pression est raccordée à la première chambre gonflable (1), une valve à une voie (3) qui est agencée conjointement avec l'ouverture entre les chambres gonflables (1, 2), de sorte que le gaz de gonflage peut uniquement passer de la première chambre (1) à la seconde chambre (2), **caractérisée en ce que** la valve à une voie (3) comprend au moins une première feuille (4) qui est réalisée avec un matériau flexible, ladite première feuille (4) étant adaptée pour être un manchon (5) ou une partie d'un manchon (5), ledit manchon (5) ayant une première extrémité (7) et une seconde extrémité (8), et au moins des ouvertures (9, 10) au niveau des deux extrémités (7, 8), ledit manchon (5) étant sensiblement fermé entre les extrémités (7, 8), ledit manchon (5) étant directement ou indirectement raccordé au niveau de la première extrémité (7) à un côté externe (6) de la première chambre (1) autour de l'ouverture de sorte qu'un passage étanche à l'air pour le gaz de gonflage est créé à l'intérieur du manchon (5).

2. Unité gonflable selon la revendication 1, dans laquelle le manchon (5) est constitué par la première feuille (4) et le côté externe (6) de la première chambre (1).

3. Unité gonflable selon la revendication 1, dans laquelle la première feuille (4) est agencée de sorte qu'elle constitue le manchon (5).

4. Unité gonflable selon la revendication 1, dans laquelle la valve à une voie (3) comprend une seconde feuille, de sorte que le manchon (5) est constitué par la première feuille et la seconde feuille.

5. Unité gonflable selon la revendication 1, dans laquelle la valve à une voie (3) comprend une pluralité de feuilles, lesdites feuilles constituant le manchon.

6. Unité gonflable selon l'une quelconque des revendications précédentes, dans laquelle la feuille (4) est raccordée à la première chambre (1) ou les feuilles sont raccordées entre elles par soudage, collage, cémentation ou leur combinaison.

7. Unité gonflable selon l'une quelconque des revendications précédentes, dans laquelle au moins l'une des feuilles est réalisée avec un matériau flexible tel que la silicone.

8. Unité gonflable selon l'une quelconque des revendications précédentes, dans laquelle une largeur (W) du manchon (5) varie le long d'une longueur (L) du manchon.

9. Unité gonflable selon l'une quelconque des revendications précédentes, dans laquelle une bride (11) est agencée entre l'ouverture au niveau de la première extrémité du manchon (5) et l'ouverture entre les deux chambres gonflables (1, 2).

10. Unité gonflable selon la revendication 9, dans laquelle la bride (11) est réalisée avec un matériau qui peut être soudé et/ou collé au côté externe (6) de la première chambre (1).

11. Unité gonflable selon la revendication 9 et/ou 10, dans laquelle la bride (11) est un composite, qui a des propriétés différentes de chaque côté de la bride (11).
